Europäisches Patentamt

European Patent Office

Office européen des brevets

(11) Veröffentlichungsnummer : **0 393 009 B1**

(19)

(12) **EUROPÄISCHE PATENTSCHRIFT**

(45) Veröffentlichungstag der Patentschrift :
14.04.93 Patentblatt 93/15

(21) Anmeldenummer : **90890072.3**

(22) Anmeldetag : **13.03.90**

(51) Int. Cl.⁵ : **B60C 11/00**

(54) **Fahrzeugluftreifen.**

(30) Priorität : **13.04.89 AT 876/89**

(43) Veröffentlichungstag der Anmeldung :
**17.10.90 Patentblatt 90/42**

(45) Bekanntmachung des Hinweises auf die
Patenterteilung :
**14.04.93 Patentblatt 93/15**

(84) Benannte Vertragsstaaten :
**AT DE FR GB IT LU**

(56) Entgegenhaltungen :
**EP-A- 0 357 462**
**DE-A- 3 425 410**
**DE-A- 3 522 967**
**US-A- 4 327 792**

(73) Patentinhaber : **Semperit Reifen**
**Aktiengesellschaft**
**Wienersdorferstrasse 20-24**
**A-2514 Traiskirchen (AT)**

(72) Erfinder : **Liederer, Werner, Dr.**
**Kapellengasse 5/3/29**
**A-2514 Traiskirchen (AT)**

(74) Vertreter : **Vinazzer, Edith**
**Semperit Reifen Aktiengesellschaft**
**Patentabteilung Wienersdorferstrasse 20-24**
**A-2514 Traiskirchen (AT)**

## Beschreibung

Die Erfindung betrifft ein Laufflächenprofil für einen Fahrzeugluftreifen mit einer Vielzahl von Profilabschnitten, in welchen sich in Richtung der Laufflächenbreite erstreckende Profilabschnittsrillen angeordnet sind, wobei in Umfangsrichtung verlaufende Laufflächenbänder bzw. Profilstreifen mit gleichartigen Profilabschnitten angeordnet sind.

Es ist bekannt, daß das von Fahrzeugluftreifen während des Abrollens entstehende Geräusch zu einem großen Teil durch die Ausgestaltung des Laufflächenprofiles verursacht wird. Es ist auch schon eine Vielzahl von Anstrengungen unternommen worden, das Laufgeräusch zu reduzieren. So ist es beispielsweise heute allgemein üblich, zu Verminderung des Profilgeräusches die Profilabschnitte in Umfangsrichtung unterschiedlich lang zu wählen. Diese Technik ist unter den Begriff Pitchlängenvariationen in Fachkreisen allgemein bekannt. Unter anderem ist es üblich, beispielsweise drei oder fünf unterschiedlich lange Pitches bzw. Profilabschnitte zu wählen, deren Längen mittels Fourier-Analyse optimiert werden, und deren Anordnung über den Reifenumfang ebenfalls durch Rechnung ermittelt wird und nach einem sinusförmigen Muster oder auch statistisch erfolgen kann. In diesem Zusammenhang wird beispielsweise auf die gattungsgemäße US-PS 4,327.792 und die US-PS 4,598.748 verwiesen. Derartige Methoden gestatten es vor allem, die Amplitude der Grundwelle zu senken und die auftretenden Frequenzen auf ein breites Frequenzband zu verteilen, wobei diese Frequenzmodulation insbesondere Einfluß auf die subjektive Wahrnehmung des Laufgeräusches nimmt. Die bekannten Methoden und die zugehörigen rechnerischen Optimierungen im Rahmen der Pitchlängenvariation haben jedoch kaum einen Einfluß auf den in dB meßbaren und somit objektiven ermittelbaren Gesamtgeräuschpegel.

Hier setzt nun die Erfindung ein, deren Aufgabe darin besteht, weitere Maßnahmen hinsichtlich der Ausgestaltung des Laufflächenprofiles zu setzen, um eine stärkere Reduzierung des Profilgeräusches zu erreichen. Diese Maßnahmen sollen sowohl eine Senkung des objektiv meßbaren Gesamtgeräuschpegels bewirken als auch das subjektiv wahrnehmbare Geräusch positiv beeinflussen.

Gelöst wird die gestellte Aufgabe bei einem gattungsgemäßen Reifen erfindungsgemäß dadurch, daß in zumindest einem Laufflächenband bzw. in zumindest einem Profilstreifen jeder einzelne Profilabschnitt für sich die Bedingung

$$\frac{2 \tan \gamma}{k^2 \pi^2} \cdot \left[ \sin k \pi \, b^*/\tan \gamma \right] \cdot \left[ \sin k \pi \, d^*/\sin \gamma \right] \leq 0,05$$

für $\gamma \neq 90°$ oder die Bedingung

$$\frac{2b^*}{k \pi} \cdot \left[ \sin k \pi \, d^* \right] \leq 0,05$$

für $\gamma = 90°$ erfüllt, wobei
k eine ganze Zahl ist, die der Anzahl der Grund- und Oberwellen entspricht und die $\geq 3$, vorzugsweise $\geq 2$, ist,
$b* = b/l_o$ die reduzierte Profilabschnittsbreite und $d* = d/l_o$ die reduzierte Breite der Profilabschnittsrille ist.
d die Breite der Profilabschnittsrille ist,
$l_o$ die Länge des Profilabschnittes in Umfangsrichtung ist,
$\gamma$ der Winkel ist, den die Profilabschnittsrille mit der Umfangsrichtung einschließt.

Werden die Profilabschnittsparameter gemäß obigen Bedingungen aufeinander abgestimmt, kann sowohl der Gesamtgeräuschpegel des Laufgeräusches merklich gesenkt werden, als auch das subjektive Geräuschempfinden positiv beeinflußt werden. Dies ist insbesondere darauf zurückzuführen, daß bei erfindungsgemäß ausgestalteten Profilabschnitten der Beitrag der Oberwellen sehr klein bzw. nahezu O gemacht werden kann. Wenn der Beitrag der höherfrequenten Oberwellen wegfällt bzw. nahezu wegfällt, dann wird zwangsweise nicht nur der Gesamtgeräuschpegel geringer, sondern es fallen auch die subjektiv als unangenehm empfundenen hohen Frequenzen nahezu weg.

Es hat sich nun herausgestellt, daß sich bestimmte Werte für die Profilabschnittsparameter besonders günstig auswirken. Insbesondere ist es von Vorteil, wenn der Neigungswinkel $\gamma$ der Profilabschnittsrille relativ

2

zur Umfangsrichtung im Bereich zwischen 45 und 90° gewählt wird.

Für die reduzierte Profilabschnittsbreite b∗ bzw. Profilstreifenbreite hat sich ein Wert zwischen 0,5 bis 1,5, vorzugsweise zwischen 0,75 und 1,25, als besonders vorteilhaft erwiesen.

Die reduzierte Profilabschnittsrillenbreite d∗ sollte in einem Bereich zwischen 0,1 bis 0,3, vorzugsweise zwischen 0,15 und 0,25, gewählt werden.

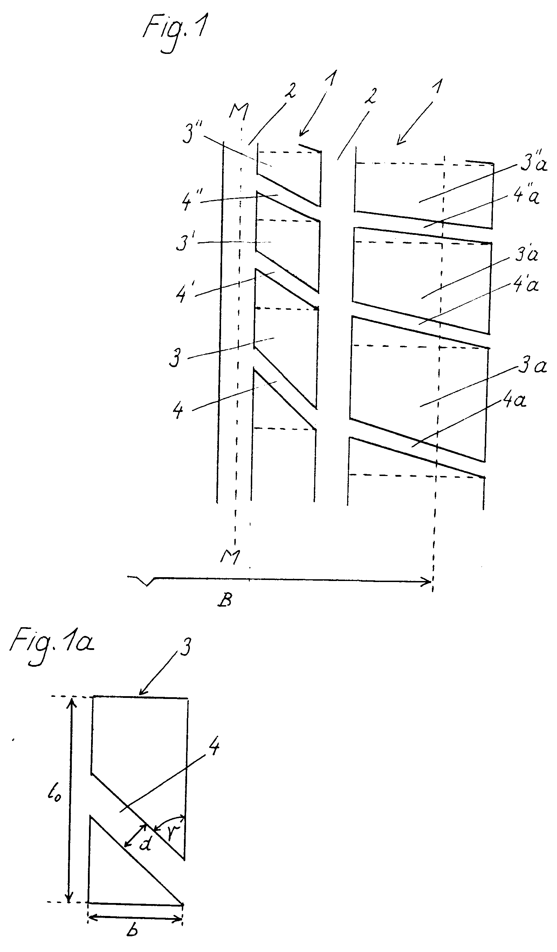

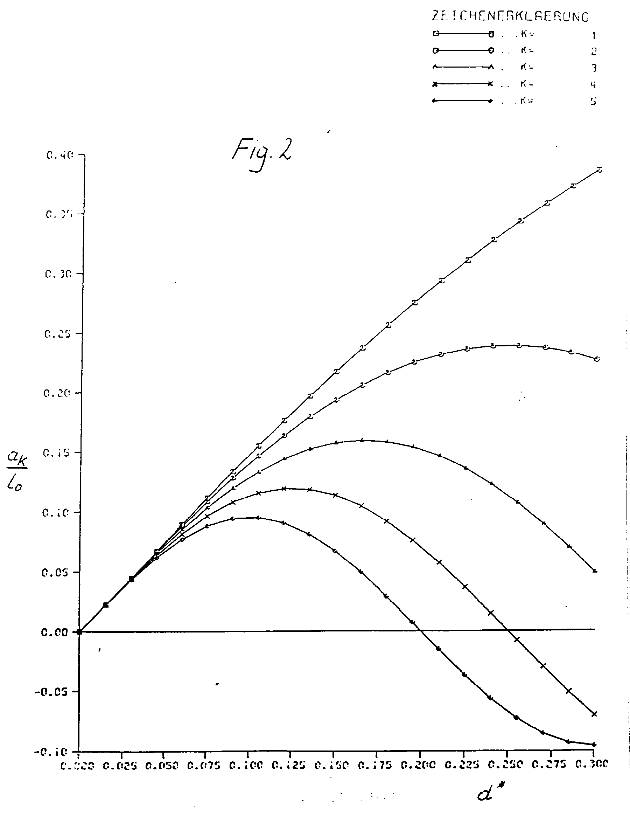

Weitere Merkmale, Vorteile und Einzelheiten der Erfindung werden nun anhand der Zeichnung, die ein Ausführungsbeispiel darstellt, näher erläutert. Hiebei ist in Fig. 1 schematisch eine Draufsicht auf eine Teilabwicklung eines Laufflächenprofiles für einen Fahrzeugluftreifen dargestellt, Fig. 1a zeigt in einem etwas vergrößerten Maßstab einen einzelnen Profilabschnitt und in den Figuren 2 bis 4 sind Diagramme dargestellt, welche den Einfluß einiger Parameter eines Profilabschnittes auf die Amplitudenhöhe zeigen.

In Fig. 1 ist mit M-M die Äquatorlinie des Laufflächenprofiles und mit B die maximale Breite des Laufflächenprofiles in der Bodenaufstandsfläche während des Abrollens des Reifens unter Nenndruck und Nennlast bezeichnet. Das Laufflächenprofil gemäß Fig. 1 ist in vier in Umfangsrichtung verlaufende Laufflächenbänder 1 gegliedert, die durch ebenfalls in Umfangsrichtung verlaufende Umfangsnuten 2 voneinander getrennt sind.

In Umfangsrichtung betrachtet, setzt sich jedes Laufflächenband 1 aus jeweils gleichartigen Profilabschnitten 3, 3′, 3″ bzw. 3a, 3′a, 3″a, zusammen. Innerhalb der Profilabschnitte 3, 3′, 3″ bzw. 3a, 3′a, 3″a, erstrecken sich Profilabschnittrillen 4, 4′, 4″ bzw. 4a, 4′a, 4″a in Richtung der Breite B der Bodenaufstandsfläche.

Für die weitere Betrachtungsweise der Erfindung wird der Profilabschnitt 3 aus einem der Laufflächenbänder 1 herausgegriffen. Der Profilabschnitt 3 weist eine Breite b auf, die somit der Breite des zugehörigen Laufflächenbandes 1 entspricht. Die im Profilabschnitt 3 verlaufende Profilabschnittrille 4 ist unter einem Winkel $\gamma$ relativ zur Umfangsrichtung (Mittelumfangslinie M-M) geneigt. Mit d ist die Dicke der Profilabschnittrille 4 bezeichnet. In Umfangsrichtung weist der Profilabschnitt 3 eine Länge $l_0$ auf.

Es wurde nun festgestellt, daß durch eine geeignete Wahl der Profilabschnittparameter, wie sie insbesondere aus Fig. 1a zu entnehmen sind, sowohl der beim Abrollen des Reifens zu erwartende Gesamtgeräuschpegel als auch das subjektive Geräuschempfinden stark beeinflußt werden können. Insbesondere wurden die Zusammenhänge zwischen den Amplituden der entstehenden Oberwellen und den einzelnen Parametern eines Profilabschnittes erkannt. Es konnte nun ermittelt werden, daß jeder einzelne Profilabschnitt, und im vorliegenden Fall wird der in Fig. 1a dargestellte betrachtet, gemäß folgender Bedingung gestaltet werden soll, um sowohl den Gesamtgeräuschpegel merklich zu senken, als auch das subjektive Geräuschempfinden positiv zu beeinflussen:

$$\frac{2\ \tan\gamma}{k^2\ \pi^2}\ \cdot\ \left[\ \sin\ k\,\pi\ b^*/\tan\gamma\ \right]\cdot\left[\sin\ k\,\pi\ d^*/\sin\gamma\right]\le 0,05\quad (\mathrm{I})$$

Hiebei ist b∗ als reduzierte Breite definiert und entspricht $b/l_0$, d∗ ist als reduzierte Rillendicke definiert und entspricht $d/l_0$. Um eine merkliche Geräuschminimierung zu erzielen, ist es wichtig, daß diese Gleichung zumindest für alle $k \ge 3$, vorzugsweise für alle $k \ge 2$ erfüllt wird. Für $\gamma = 90°$ wird diese Ungleichung durch Grenzwertbildung $\gamma \to 90°$ in folgende vereinfachte Bedingung überführt:

$$\frac{2b^*}{k\,\pi}\ \cdot\ \left[\ \sin\ k\,\pi\ d^*\ \right]\ \le\ 0,05.\qquad (\mathrm{II})$$

Zur Erläuterung der Erfindung werden nun die Figuren 2 bis 4 näher betrachtet. Hiebei wurde eine von der Länge $l_0$ der Profilabschnitte unabhängige Darstellungsweise gewählt, um weitere Parameter, etwa die Gesamtzahl der über den Reifenumfang aneinandergereihten Profilabschnitte, außer Acht lassen zu können. Demnach wurde die reduzierte Breite b∗, die reduzierte Rillenbreite d∗ und die ebenfalls durch $l_0$ dividierten Fourier-Amplituden $a_k$ herangezogen. In den Diagrammen ist jeweils auf der x-Achse die reduzierte Rillenbreite d∗ in einem Bereich von 0 bis 0,3 aufgetragen, auf der y-Achse der durch Rechnung ermittelte Wert $a_k/l_0$.

Rechnerisch wurde ein Laufstreifen bzw. ein Laufflächenband der Breite b betrachtet, bei dem die Länge der aneinandergereihten Profilabschnitte konstant gehalten wurde. Aus diesem Grund ist auch in sämtlichen Diagrammen die Amplitude der Grundwelle (k = 1) hoch.

Fig. 2 zeigt nun das Ergebnis für Profilabschnitte, bei denen der Winkel $\gamma = 90°$ und die reduzierte Breite b* = 0,75 gewählt sind. Hier handelt es sich um einen ungünstigen, nicht der vorliegenden Erfindung entsprechenden Fall der Wahl der Parameter, was sich dadurch äußert, daß nicht nur die Amplitude der Grundwelle k = 1) stark aufscheint, sondern auch die Amplituden der hier berücksichtigten ersten vier Oberwellen (k = 2 bis 5).

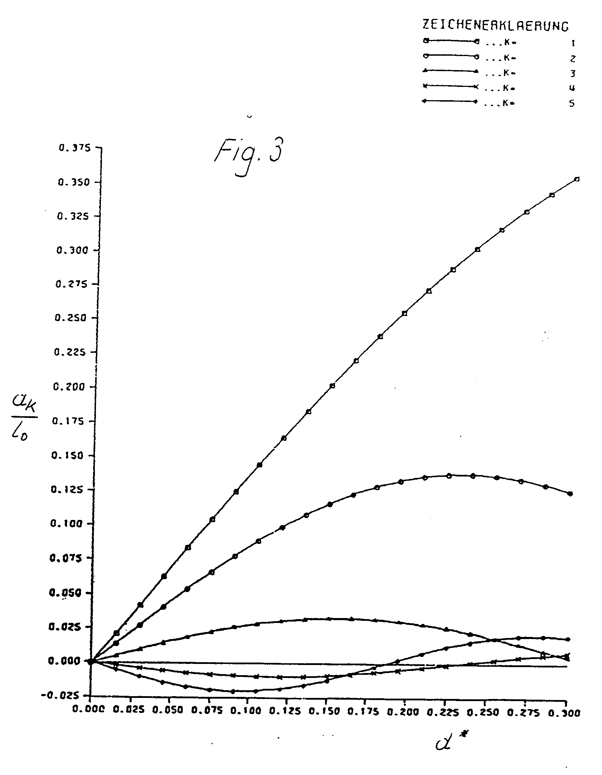

Fig. 3 zeigt den Fall für gemäß der Erfindung optimierte Profilabschnitte, wobei γ= 70° und b* = 0,75 gewählt sind. Hier ist nur noch die Amplitude der ersten Oberwelle (k = 2) hoch, jedoch sind die Amplituden der zweiten bis fünften Oberwelle (k = 3 bis 5) sehr klein, insbesondere kleiner als 0,05, was der Gleichung I entspricht.

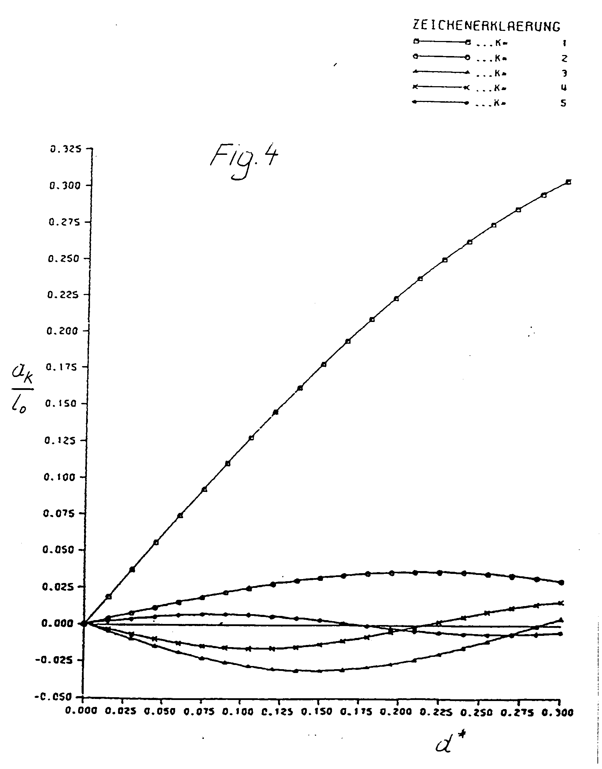

Fig. 4 zeigt schließlich die Fourier-Amplituden für Profilabschnitte, bei denen γ= 60° und b* wiederum 0,75 gewählt wurde. Hier handelt es sich um gemäß der Erfindung optimierte Profilabschnitte, da die Amplituden der Oberwellen (k = 2 bis 5) vernachlässigbar klein sind.

Durch geeignete Wahl der Parameter der Profilabschnitte können somit die Amplituden der Oberwellen vernachlässigbar klein gemacht werden. Die Grundwelle muß jedoch weiterhin, wie es auch im Stand der Technik schon vielfach beschrieben ist, durch Modulation mittels Pitchlängenvariation optimiert werden. Eine derartige Modulation ist jedoch nicht Gegenstand der vorliegenden Erfindung. Es muß aber in Betracht gezogen werden, daß bei einer derartigen Pitchlängenvariation bzw. Variation der Länge der aneinandergereihten Profilabschnitte darauf zu achten ist, daß jeder Profilabschnitt für sich erfindungsgemäß optimiert bzw. gestaltet ist, damit der nach der Erfindung erzielbare Effekt zum Tragen kommt. Es sei weiters darauf verwiesen, daß nicht sämtliche bei einem Laufflächenprofil vorliegenden Profilstreifen gemäß der Erfindung gestaltet sein müssen. Je nach der Ausgestaltung des Profiles kann der eine oder andere Laufflächenbereich von einer derartigen Gestaltung ausgenommen werden.

Bestimmte Wertebereiche für die einzelnen Profilabschnittsparameter sind nun besonders günstig. Insbesondere sollte der Neigungswinkel γ 45° überschreiten. Die reduzierte Breite b* sollte vorteilhafterweise zwischen 0,5 und 1,5, vorzugsweise zwischen 0,75 und 1,25, die reduzierte Rillenbreite d* zwischen 0,1 und 0,3, vorzugsweise zwischen 0,15 und 0,25,gewählt werden.

Es wird schließlich noch darauf verwiesen, daß die Erfindung selbstverständlich auch die Optimierung von Profilabschnitten umfaßt, bei denen die Profilabschnittsrillen als Sackrillen ausgebildet sind.

## Patentansprüche

1. Laufflächenprofil für einen Fahrzeugluftreifen mit einer Vielzahl von Profilabschnitten (3), in welchen sich axial in Richtung der Laufflächenbreite (B) erstreckende Profilabschnittsrillen (4) angeordnet sind, die mit der Umfangsrichtung einen Neigungswinkel γ einschließen und eine Breite d haben, wobei in Umfangsrichtung verlaufende Laufflächenbänder (1) bzw. Profilstreifen mit gleichartigen Profilabschnitten (3) vorgesehen sind, die eine Breite b und eine Umfangslänge $l_o$ aufweisen, dadurch gekennzeichnet, daß in zumindest einem Laufflächenband (1) bzw. in zumindest einem Profilstreifen jeder einzelne Profilabschnitt (3) für sich die Bedingung

$$\frac{2 \tan \gamma}{k^2 \pi^2} \cdot \left[ \sin k \pi b^*/\tan \gamma \right] \cdot \left[ \sin k \pi d^*/\sin \gamma \right] \leq 0{,}05$$

für γ≠ 90° oder die Bedingung

$$\frac{2b^*}{k \pi} \cdot \left[ \sin k \pi d^* \right] \leq 0{,}05$$

für γ = 90° erfüllt, wobei

k eine ganze Zahl ist, die der Anzahl der Grund-und Oberwellen entspricht und die $\geq$ 3, vorzugsweise $\geq$ 2, ist,

b* = b/$l_o$ die reduzierte Profilabschnittsbreite und d* = d/$l_o$ die reduzierte Breite der Profilabschnittsrille (4) ist.

**2.** Laufflächenprofil nach Anspruch 1, dadurch gekennzeichnet, daß der Neigungswinkel ($\gamma$) der Profilabschnittsrille (4) relativ zur Umfangsrichtung zwischen 45 und 90° beträgt.

**3.** Laufflächenprofil nach Anspruch 1 oder 2, dadurch gekennzeichnet, daß die reduzierte Profilabschnittsbreite (b∗) bzw. reduzierte Profilstreifenbreite zwischen 0,5 und bis 1,5, vorzugsweise zwischen 0,75 und 1,25,beträgt.

**4.** Laufflächenprofil nach Anspruch 1 oder 2, dadurch gekennzeichnet, daß die reduzierte Profilabschnittsrillenbreite (d∗) zwischen 0,1 und 0,3, vorzugsweise zwischen 0,15 und 0,25,beträgt.

**Claims**

**1.** Tread surface profile for a pneumatic vehicle tyre, having a plurality of profile portions (3), in which are disposed profile portion grooves (4), which extend axially in a direction towards the tread surface width (B), form an angle of inclination $\gamma$ with the circumferential direction and have a width $\underline{d}$, tread surface bands (1) or respectively profile strips extending in the circumferential direction, being provided with identical profile portions (3) and having a width $\underline{b}$ and a circumferential length $l_o$, characterised in that, in at least one tread surface band (1) or respectively in at least one profile strip, each individual profile portion (3) _per se_ satisfies the condition

$$\frac{2\,\tan\gamma}{k^2\pi^2}\cdot\left[\sin\,k\,\pi\,b*/\tan\gamma\right]\cdot\left[\sin\,k\,\pi\,d*/\sin\gamma\right]\leq 0.05$$

for $\gamma = 90°$, or satisfies the condition

$$\frac{2b*}{k\,\pi}\cdot\left[\sin\,k\,\pi\,d*\right]\leq 0.05$$

for $\gamma = 90°$, wherein
k is a whole number which corresponds to the number of the bottom and top corrugations and is $\geqq 3$, preferably $\geqq 2$;
b∗ = b/$l_o$, the reduced profile portion width; and
d∗ = d/$l_o$, the reduced width of the profile portion groove (4).

**2.** Tread surface profile according to claim 1, characterised in that the angle of inclination ($\gamma$) of the profile portion groove (4) relative to the circumferential direction is between 45° and 90°.

**3.** Tread surface profile according to claim 1 or 2, characterised in that the reduced profile portion width (b∗) or respectively reduced profile strip width is between 0.5 and 1.5, preferably between 0.75 and 1.25.

**4.** Tread surface profile according to claim 1 or 2, characterised in that the reduced profile portion groove width (d∗) is between 0.1 and 0.3, preferably between 0.15 and 0.25.

**Revendications**

**1.** Sculpture de surface de roulement pour bandage pneumatique pour véhicules comprenant un certain nombre de sections de sculpture (3) dans lesquelles sont prévues des rayures (4) s'étendant axialement en direction de la largeur (B) de la surface de roulement, qui forment un angle d'inclinaison $\gamma$ avec la direction périphérique et sont de largeur d, des bandes de surface de roulement (1) ou des bandes de sculpture comprenant des sections de sculpture de même type (3) s'étendant en direction périphérique, qui sont de largeur $\underline{b}$ et de longueur périphérique $l_o$,
    caractérisée en ce qu'au moins dans une bande de surface de roulement (1) ou au moins dans une bande de la sculpture, chaque section de sculpture individuelle (3) satisfait la condition:

$$\frac{2\tan\gamma}{K^2\pi^2} \cdot [\sin k \, \pi \, b^* /\tan\gamma] \cdot [\sin k \, \pi \, d^* /\sin\gamma] \leqq 0{,}05$$

quand $\gamma \neq 90°$

ou

$$\frac{2b^*}{k \, \pi} \cdot [\sin k \, \pi \, d^*] \leqq 0{,}05$$

quand $\gamma = 90°$

où

k est un nombre entier correspondant au nombre des ondes fondamentale et harmoniques, qui est $\geqq 3$ et de préférence $\geqq 2$, et

$b_* = b/l_o$ représente la largeur réduite de la section de sculpture, et

$d_* = d/l_o$ représente la largeur réduite de la rayure (4) de la section de sculpture.

2. Sculpture de surface de roulement selon la revendication 1, caractérisée en ce que l'angle d'inclinaison ($\gamma$) par rapport à la direction périphérique de la rayure (4) de la section de sculpture est compris entre 45° et 90°.

3. Sculpture de surface de roulement selon la revendication 1 ou 2, caractérisée en ce que la largeur réduite ($b_*$) de la section de sculpture ou la largeur réduite de la bande de sculptures est comprise entre 0,5 et 1,5 et de préférence entre 0,75 et 1,25.

4. Sculpture de surface de roulement selon la revendication 1 ou 2, caractérisée en ce que la largeur réduite de la rayure des sections de sculpture ($d_*$) est comprise entre 0,1 et 0,3 et de préférence entre 0,15 et 0,25

Fig.1

Fig.1a

Fig. 2

Fig. 3

Fig. 4